# EUROPEAN PATENT APPLICATION

(11) **EP 1 870 755 A1**
(43) Date of publication of application: **26.12.2007**
(21) Application number: 06731767.7
(22) Date of filing: 13.04.2006
(51) Int. Cl.: G02B 7/04, G02B 7/10, G03B 9/10, H04N 5/225, H04N 101/00

(54) **LENS BARREL**

(30) Priority: 14.04.2005 JP 2005116755
(71) Applicant: NIKON CORPORATION, Tokyo 100-8331 (JP)
(72) Inventor: MIYAMOTO, Hidenori c/o NIKON CORPORATION, Tokyo 108-8331 (JP)
(74) Representative: Walaski, Jan Filip
(86) International application number: PCT/JP2006/307831
(87) International publication number: WO 2006/112353

(57) **Abstract**

A lens barrel includes: a photographic optical system capable of altering focal length; a movable lens group constituting part of the photographic optical system, that moves along an optical axis when altering the focal length; an image sensor disposed at an image forming plane of the photographic optical system to capture a subject image; and a shutter unit disposed between the movable lens group and the image sensor, that comprises a shutter blade that blocks a photographic light flux passing through the photographic optical system. A principal point of the photographic optical system moves as the movable lens group moves along the optical axis. The shutter unit is disposed by assuring that a distance between a range of motion endpoint of the movable lens group and the shutter blade is shorter than a distance between the image sensor and the shutter blades.

## Description

### Technical Field

Present invention relates to a lens barrel that includes a photographic optical system, the position of the principal point of which is allowed to move.

### Background Art

There is a lens barrel with a built-in shutter known in the related art, which is considered to contribute toward further miniaturization of compact-type cameras (see, for instance, patent reference literature 1). The lens barrel disclosed in patent reference literature 1 includes a shutter unit installed as an integrated part of a movable lens group so as to allow the shutter unit to move as the movable lens group moves.

Patent reference literature 1 : Japanese Laid Open Patent Publication No. 2003-241056

### Disclosure of the Invention

### Problems to be Solved by the Invention

A lens barrel that allows the movable lens group and the shutter unit to move together requires an actuator with a significant drive force to move the movable lens group and the shutter unit. It also needs to assure a sufficient moving space where the large shutter unit is able to move and these requirements give rise to an increase in the overall size of the lens barrel.

### Means For Solving The Problems

A lens barrel according to a first aspect of the present invention includes: a photographic optical system capable of altering focal length; a movable lens group constituting part of the photographic optical system, that moves along an optical axis when altering the focal length; an image sensor disposed at an image forming plane of the photographic optical system to capture a subject image; and a shutter unit disposed between the movable lens group and the image sensor, that comprises a shutter blade that blocks a photographic light flux passing through the photographic optical system, wherein: a principal point of the photographic optical system moves as the movable lens group moves along the optical axis; and the shutter unit is disposed by assuring that a distance between a range of motion endpoint of the movable lens group and the shutter blade is shorter than a distance between the image sensor and the shutter blades.
It is preferable that when the shutter blade is engaged in operation to block the photographic light flux in the photographic optical system, the shutter blade moves along a direction extending substantially along a shorter side of a rectangular imaging area.
The shutter blade may include a plurality of shutter blades individually driven along different directions all substantially perpendicular to the optical axis of the photographic optical system. It is preferable that the plurality of shutter blades are two shutter blades and as the two shutter blades move closer to each other, the photographic light flux is blocked until the two shutter blades enter a closed state with the two shutter blades placed one over another near the optical axis.
It is preferable that the shutter blade is disposed in an immediate vicinity of the range of motion endpoint of the movable lens group.
An imaging apparatus according to a second aspect of the present invention includes: a lens barrel according to the first aspect.

### Advantageous Effect of the Invention

According to the present invention, the lens barrel can be provided as a compact unit.

### Brief Description of the Drawings

(FIG. 1) An external view of a lens barrel achieved in an embodiment of the present invention, taken from the side where the optical axis of an objective lens is present
(FIG. 2) Sectional views taken through II-II in FIG. 1 in the wide-angle end state and in the telephoto end state respectively presented in the diagrams (a) and (b)
(FIG. 3) A sectional view taken through III-III in FIGS. 2(a) and 2(b)
(FIG. 4) A sectional view taken through IV-IV in FIG. 3
(FIG. 5) A sectional view taken through V-V in FIG. 3
(FIG. 6) The structures adopted in the objective lens and a first lens group in the lens barrel shown in FIG. 1, illustrated in the diagrams (a) ~ (c)
(FIG. 7) An external view of the lens barrel in FIG. 1 in a perspective taken from the side on which a CCD is disposed
(FIG. 8) Schematic illustrations of the method adopted when mounting a motor holder unit at the barrel body, provided in the diagrams (a) and (b)
(FIG. 9) Views of a shutter drive unit and a shutter blade taken along the direction of the optical axis, provided in the diagrams (a) and (b)
(FIG. 10) A schematic illustration of the relationship between the light fluxes from a photographic optical system and a shutter blade
(FIG. 11) The relationship between the position assumed at an imaging plane shown in FIG. 10 and the exposure quantity
(FIG. 12) The relationship between the shutter blade position and the time indicated in the diagrams (a) and (b)
(FIG. 13) Views of the shutter drive unit and the shutter blade achieved in a second embodiment taken along the direction of the optical axis, provided in the diagrams (a) and (b)
(FIG. 14) The relationship between the shutter blade position and the time indicated in the diagrams (a) ~ (c)
(FIG. 15) A schematic illustration of the structure adopted in an imaging apparatus equipped with the lens barrel achieved in an embodiment of the present invention

### Best Mode for Carrying Out the Invention

In the embodiments of the present invention improvements are achieved with regard to the structure and the position of a shutter unit so as to provide a lens barrel allowing displacement of the principal point of a photographic optical system as a compact, lightweight unit.

### -- First Embodiment -

The first embodiment of the present invention is now explained in detail in reference to drawings and the like.

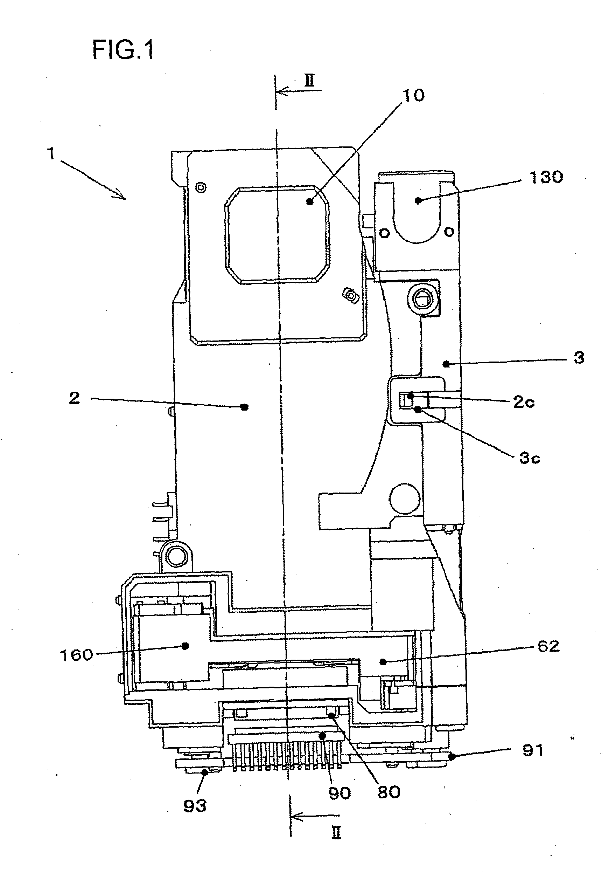

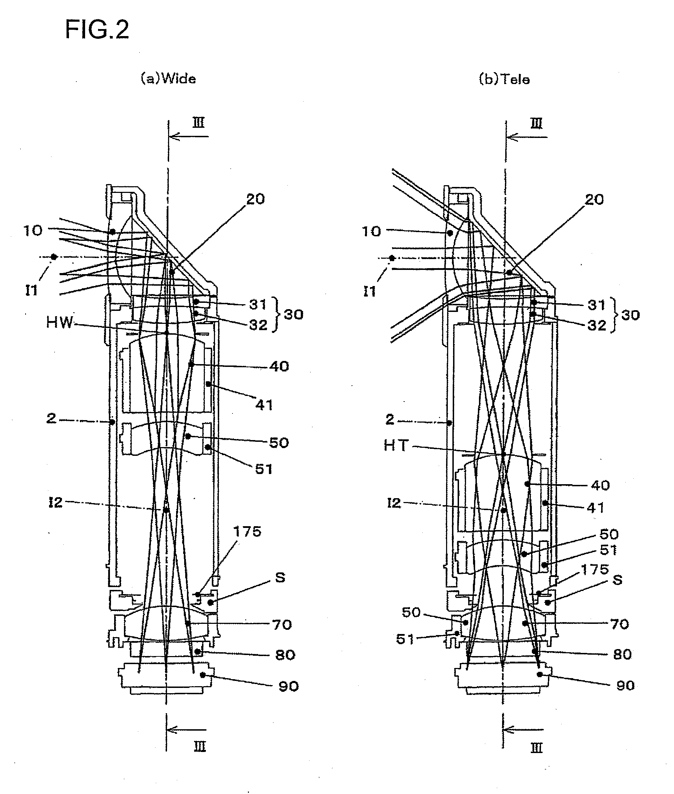

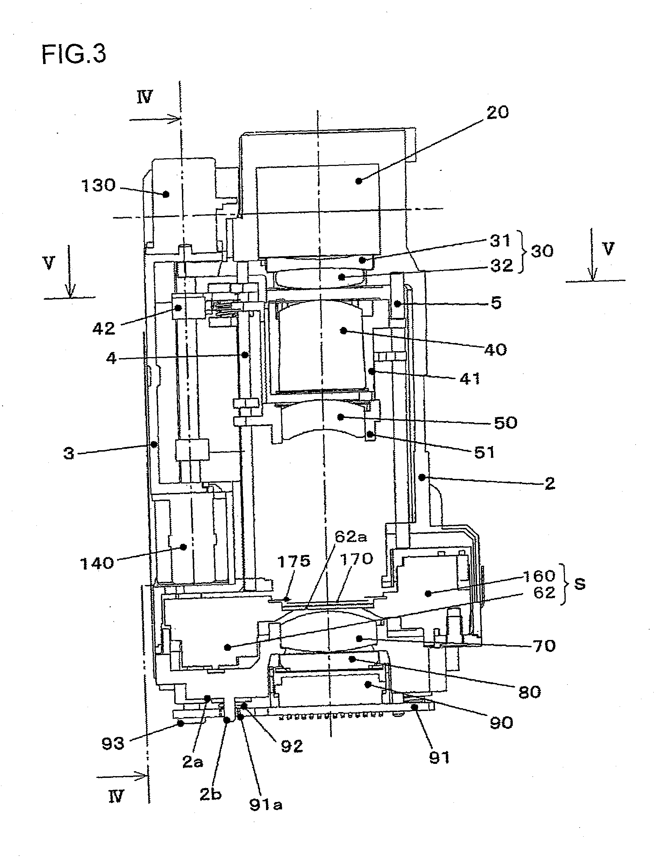

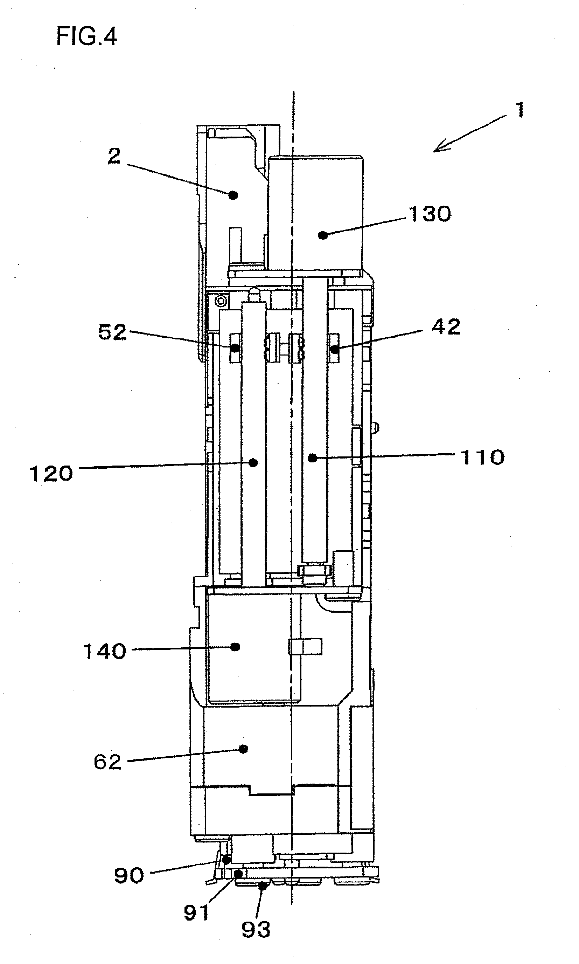

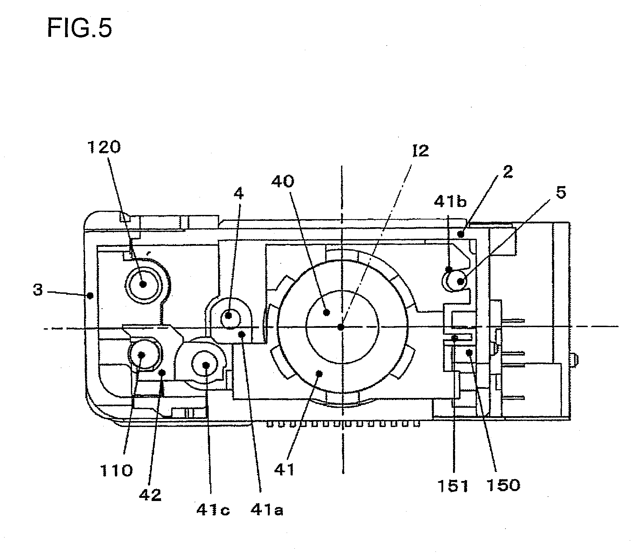

FIG. 1 is an external view of a lens barrel achieved in the first embodiment of the present invention, taken from the side where the optical axis of an objective lens is present (the subject side). FIGS. 2(a) and 2(b) each present a sectional view taken through II-II in FIG. 1. FIG. 2 (a) shows the wide-angle end state, whereas FIG. 2 (b) shows the telephoto end state. FIG. 3 is a sectional view taken through III-III in FIGS. 2 (a) and 2 (b). FIG. 4 is a sectional view taken through IV-IV in FIG. 3 and FIG. 5 is a sectional view taken through V-V in FIG. 3.

A lens barrel 1 achieved in the first embodiment includes a bending optical system, the optical axis of which changes direction part way through. This lens barrel may be used as a, for instance, a photographic lens barrel of a digital still camera.

The lens barrel 1 includes a barrel body 2, a motor holder unit 3, a guide shaft 4 and a rotation stopper shaft 5 (see FIG. 3 for details of the guide shaft 4 and the rotation stopper shaft 5).
The barrel body (lens barrel main body) 2, which assumes a substantially rectangular parallelepiped box shape, houses therein the bending optical system to be detailed later.

The motor holder unit 3, which is detachably attached to a side of the barrel body 2, supports lead screws 110 and 120 and motors 130 and 140 to be described later. The motor holder unit 3 assumes the shape of a box with an opening formed over an area where it is connected to the barrel body 2. An opening is formed at the barrel body 2 over an area facing the motor holder unit 3, and as the barrel body 2 and the motor holder unit 3 are joined together with these openings aligned to face opposite each other, a continuous space is formed inside.
It is to be noted that the barrel body 2 and the motor holder unit 3 are each formed by injection molding a resin material.

The guide shaft 4, disposed inside the barrel body 2, is a rod-shaped member with a circular section, which extends parallel to an optical axis I2 (see FIG. 2), and guides a second lens group 40 and a third lens group 50 to be detailed later along the optical axis.
The rotation stopper shaft 5 is disposed inside the barrel body 2 over an area on the opposite side from the guide shaft 4 across the second lens group 40 and the third lens group 50. The rotation stopper shaft 5 is a rod-like member with a circular section extending parallel to the optical axis I2, which prevents rotation of the second lens group 40 and the third lens group 50 around the guide shaft 4.

The optical systems housed in the barrel body 2 include an objective lens 10, a prism 20, a first lens group 30, the second lens group 40, the third lens group 50, a shutter unit S, a fourth lens group 70, a low pass filter (LPF) 80 and an image sensor 90. The objective lens 10 is the lens disposed closest to the subject among the optical systems housed in the barrel body 2. The first lens group 30, the second lens group 40, the third lens group 50 and the fourth lens group 70 each include at least one lens. The image sensor 90, which may be constituted with a CCD or CMOS, captures a subject image having passed through the objective lens 10, the prism 20, the first lens group 30 and the like. The following explanation is provided with the assumption that the image sensor 90 is constituted with a CCD.

The objective lens 10 is fixed onto the front side of the barrel body 2 facing toward the subj ect over an area adj acent to an opening formed near the end which is set on the top side when the camera 2 equipped with the lens barrel 1 is held sideways, i.e., during a regular photographing operation.
The prism 20 is fixed over an area of the barrel body 2 on the exit side of the objective lens 10 and bends the direction of image light exiting the objective lens 10 by, for instance, 90°.

The first lens group 30 is fixed over an area of the barrel body 2 on the exit side of the prism 20 (set on the bottom side during a regular photographing operation). It is to be noted that the optical axis I2 of the first lens group 30 and the subsequent optical systems is set perpendicular to an optical axis I1 of the objective lens 10. The optical axis I2 extends along a substantially vertical direction when the camera is engaged in a regular photographing operation.

The first lens group 30 is constituted by laminating lenses 31 and 32 disposed sequentially in this order from the light entry side, with the lens 31 assuming a greater diameter than the lens 32. The first lens group 30 is positioned as the outer circumferential edge of the lens 31 extending beyond the edge of the lens 32 is locked into a recessed portion formed at the barrel body 2.

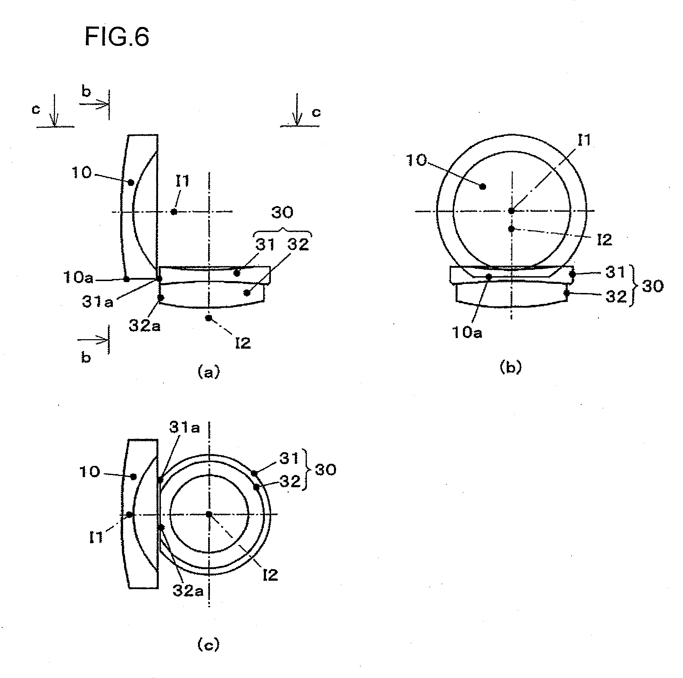

FIGS. 6(a) ~ 6(c) show the structures adopted in the objective lens 10 and the first lens group 30. FIG. 6 (a) shows the first lens group 30 viewed from a direction perpendicular to both the optical axis I1 and the optical axis I2, whereas FIGS. 6(b) and 6(c) present views taken through b-b and c-c in FIG. 6(a) respectively.

The objective lens 10 is a D-cut lens achieved by cutting off a portion of its external circumferential edge over an area to be set adjacent to the first lens group 30. Its end surface 10a over this area is a flat surface, which is set to face downward during a regular photographing operation.

The lenses 31 and 32 in the first lens group 30 each assume a D-shape achieved by cutting a portion of the outer circumferential edge thereof over an area to be set adjacent to the objective lens 10. Their end surfaces 31a and 32a over these areas are flat surfaces facing toward the objective side (photographic subject side) along the optical axis I1, i.e., toward the objective lens 10. In addition, the end surface 31a of the lens 31 in the first lens group 30 is set so as to face opposite the rear surface side (opposite side from the subject side) of the objective lens 10 at a very small distance.

The second lens group 40, disposed in the space inside the barrel body 2 on the exit side of the first lens group 30, is a movable lens group movably supported at the barrel body 2 so as to allow a displacement thereof relative to the barrel body 2 along the optical axis 12.
The second lens group 40 includes a lens holder 41 which is a frame structure disposed on the exterior thereof, and as this movable lens holder 41 slides along the lengthwise direction against the guide shaft 4 and the rotation stopper shaft 5, the lens holder moves along the optical axis 12.
As shown in FIG. 3, the guide shaft 4 and the rotation stopper shaft 5 are disposed in areas on the opposite sides of the optical axis I2 of the lens holder 41 and they both extend parallel to the optical axis I2.

As shown in FIG. 5, the lens holder 41 includes an opening 41a and a groove 41b.
The guide shaft 4 is inserted through the opening 41a, the diameter of which is set greater than the diameter of the guide shaft 4 by an extent corresponding to the necessary clearance.
The rotation stopper shaft 5 is inserted in the groove 41b, which is formed by recessing or notching the outer edge of the lens holder 41. The groove width of the groove 41b is set greater than the diameter of the rotation stopper shaft 5 by an extent corresponding to the necessary clearance. It is to be noted that the rotation stopper shaft 5 does not restrain the movement of the lens holder 41 along the direction in which the groove 41b extends, i.e., along the left/right direction in FIG. 5 and any dimensional error resulting from dimensional inconsistency between the opening 41a and the groove 41b can thus be absorbed.

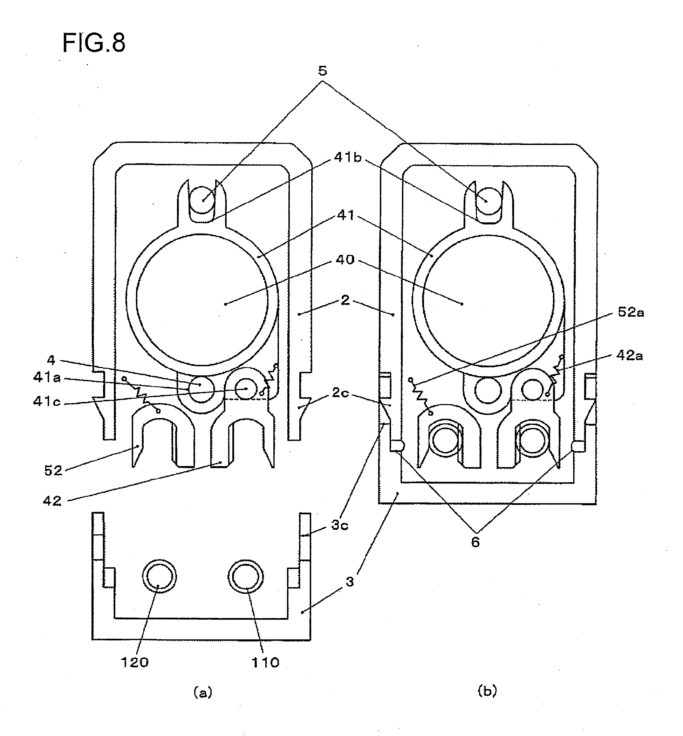

In addition, the lens holder 41 includes a lens holder nut 42. The lens holder nut 42 is a drive target member with a threaded portion to interlock with the lead screw 110 to be described later, formed at one of the inner surfaces of a groove at which the lead screw 110 is inserted. The lens holder nut 42 assumes a two-pronged shape with the two prongs ranging across the groove. The lens holder nut 42 is rotatably supported so as to be allowed to rotate around a shaft portion 41c disposed at the outer circumferential edge of the lens holder 41 in parallel to the optical axis 12, a force is applied to the lens holder nut by a spring 42a (see FIGS. 8(a) and 8 (b)) along a specific rotating direction and thus, its female screw portion is pressed against the surface of the lead screw to be detailed later.

The third lens group 50 disposed on the exit side of the second lens group 40 is housed in the space where the second lens group 40 is also housed at the lens body 2. The third lens group 50 is a movable lens group movably supported so as to allow displacement thereof relative to the lens body 2 along the optical axis I2.
The third lens group 50 includes a lens holder 51 which is a frame structure disposed on the exterior thereof. This movable lens holder 51 is movably supported by the guide shaft 4 and the rotation stopper shaft 5 so as to be allowed to move along the optical axis I2, as is the movable lens holder 41 described earlier.

The lens holder 51 includes a lens holder nut 52, adopting a structure similar to that of the lens holder nut 42 at the lens holder 41, which is to engage with the lead screw 120 to be described later. A force is applied to the lens holder nut 52 by a spring 52a (see FIGS. 8(a) and 8 (b)).
It is to be noted that the range of movement of the second lens group 40 and the range of movement of the third lens group 50 are set so as to partially overlap each other.

As shown in FIG. 2 (a), the second lens group 40 and the third lens group 50 assume positions close to the first lens group 30 at the wide-angle end. At the telephoto end, the second lens group 40 and the third lens group 50 are displaced to assume positions close to the shutter unit S to be detailed later, as shown in FIG. 2(b). As the second lens group 40 and the third lens group 50 move as described above, the position of the principal point, too, moves between the principal point position HW at the wide-angle end and the principal point position HT at the telephoto end.

The shutter unit S includes a shutter blade 170 (to be detailed later) that blocks image light exiting the third lens group 50 to enter the fourth lens group 70 and an aperture unit (light quantity adjustment unit) which is disposed further toward a CCD 90 relative to the shutter blade 170 and is equipped with a ND filter 62a for reducing the quantity of the image light. This aperture unit inserts the specific ND filter 62a into the light path in response to an insert instruction signal output from a control unit (not shown) and moves the ND filter 62a out of the light path in response to a retreat instruction signal output from the control unit.
A shutter drive unit 160 and an ND filter drive unit 62 disposed at the shutter unit S respectively drive the shutter blade 170 and the ND filter 62a.

The shutter drive unit 160 and the ND filter drive unit 62 are disposed on the opposite sides across the light path. The ND filter drive unit 62 is disposed adjacent to a motor 140 to be detailed later on the image side along the optical axis I2, whereas the shutter drive unit 160 takes up a position offset toward the objective side relative to the ND filter drive unit 62 along the optical axis 12.
The shutter blade 170 and the shutter drive unit 160 are to be described in detail later.

The fourth lens group 70, fixed at the barrel body 2 over an area on the exit side of the shutterunit S, is a condenser lens which sets the angle of incidence of the image light at the CCD 90 substantially parallel to the optical axis I2. It is to be noted that depending upon the structures adopted in the photographic optical system and the image sensor, the condenser lens may be omitted.
The LPF 80 is an optical low pass filter fixed at the barrel body 2 over an area on the exit side of the fourth lens group 70.

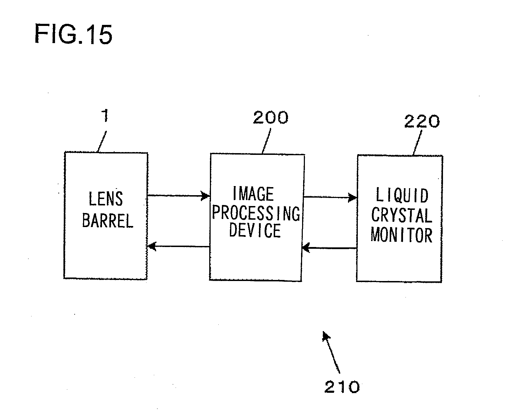

The CCD 90 is an image sensor that forms an image with the image light exiting the LPF 80 and captures the image as an electrical signal. The CCD 90 in the first embodiment includes a rectangular imaging area as is the norm in digital cameras. The electrical signal output from the CCD 90 is input to an image processing device 200, as shown in FIG. 15, and is saved as an image file. An imaging apparatus 210 is constituted with the lens barrel 1 and the image processing device 200. The imaging apparatus 210 may include a liquid crystal monitor 220 at which the saved image can be displayed.

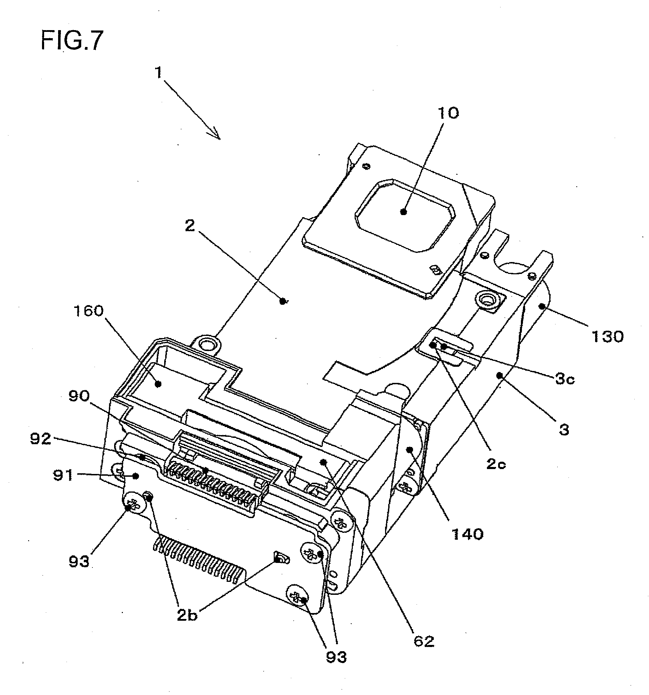

FIG. 7 is an external view of the lens barrel 1 in a perspective taken from the side on which the CCD 90 is installed.
The CCD 90 is supported at a substrate 91 fixed onto the rear surface side of the CCD 90. As shown in FIG. 3, the substrate 91 is mounted via an elastic member (spring) 92 disposed between the substrate 91 and an end surface 2a of the barrel body 2 facing opposite the substrate.
A pin 2b is formed at the end surface 2a to project out beyond the end surface, and as the pin 2b is inserted at an opening 91a formed in the substrate 91, the substrate 91 is positioned along the direction perpendicular to the optical axis I2.

The substrate 91 is locked by screwing, for instance, three screws 93 set apart from one another at the outer edge of the substrate 91 into the end surface 2a of the barrel body 2 and then tightening the three screws 93. While the elastic member 92 is subjected to pressure and undergoes elastic deformation as the screws 93 are screwed in, the extent of this deformation is determined in correspondence to the extent to which the screws 93 are tightened. In addition, by tightening or loosening some of the three screws 93, the substrate 91 can be tilted along a desired direction relative to the optical axis I2. By tilting the substrate 91 in this manner, angular adjustment can be achieved so as to optimize the position of the imaging surface of the CCD 90 in correspondence to the extent of dislocation of the image plane attributed to the optical systems.

As shown in FIG. 4, the motor holder unit 3 includes the lead screws 110 and 120 and the motors 130 and 140.
The lead screws 110 and 120 each extend parallel to the optical axis I2 and each function as a drive shaft with a screw portion formed at the external circumferential surface thereof. The lead screws 110 and 120 are disposed along the optical axis I1, with the lead screw 120 set further toward the obj ective lens along the optical axis 11 relative to the lead screw 110. The lead screws 110 and 120 are rotatably supported at the motor holder unit 3 so as to be allowed to rotate around the respective central axes.

The lead screw 110 engages with the lens holder nut 42 connected to the lens holder 41 of the second lens group 40 and drives the second lens group 40 along the optical axis 12.
The lead screw 120 engages with the lens holder nut 52 connected to the lens holder 51 of the third lens group 50 and drives the third lens group 50 along the optical axis 12.

The motor 130, which rotationally drives the lead screw 110 is connected to the end of the lead screw 110 toward the objective (the upper side in FIG. 4) along the optical axis I2.
The motor 130 includes a cylindrical housing formed substantially coaxial to the lead screw 110 and is fixed to the motor holder unit 3 by fastening with a screw a flange portion projecting out toward the outer diameter thereof from the end surface of the housing on the side closer to the lead screw 110.

The motor 140, which rotationally drives the lead screw 120 is connected to the end of the lead screw 120 toward the objective (the lower side in FIG. 4) along the optical axis I2. The motor 140 is disposed at a position at which it partially overlaps the motor 130 when viewed from the direction of the optical axis I2.
The motor 140 includes a cylindrical housing formed substantially coaxial to the lead screw 120 and is fixed to the motor holder unit 3 by fastening with a screw a flange portion projecting out toward the outer diameter thereof from the end surface of the housing on the side closer to the lead screw 120.

It is to be noted that while FIG. 4 shows the motors 130 and 140 disposed on the objective side and the image side respectively, the two motors 130 and 140 may insteadbe disposed on the same side. It is also to be noted that the objective side is the side where the subj ect photographed with the camera mounted with the lens barrel 1 is present, whereas the image side is the side where the subject image captured by the CCD 90 is present.

It is to be noted that the ends of the lead screws 110 and 120 on the side opposite from the ends at which the motors 130 and 140 are connected to the lead screws 110 and 120 are inserted at recessed portions formed at the motor holder unit 3. The recessed portions may be formed by using a material different from the material used to constitute the motor holder unit 3, with a smaller coefficient of friction than that of the material constituting the motor holder unit 3. In this case, the lead screws 110 and 120 will be supported on both sides so as to reduce the extent of vibration occurring as they rotate.

In addition, as shown in FIG. 5, position detectors 150 are disposed in the lens barrel 1 to detect the positions of the individual movable lens groups, i.e., the second lens group 40 and the third lens group 50.
Although not shown in FIGS. 1 through 4, a pair of position detectors 150 may be provided in correspondence to each of the movable lens groups, i.e., the second lens group 40 and the third lens group 50. The position detectors 150 for each lens group may be disposed near the two ends of the range of movement of the detection target lens group.

The position detectors 150 are each constituted with a photointerrupter disposed at the barrel body 2 at its inner wall surface facing opposite the lens holders 41 or 51 to detect a projection 151 projecting out of the external circumferential edge of the lens holder 41 (51) as it passes through. The photointerrupter includes an LED and an SPD disposed on the opposite sides of the space through which the projection 151 passes so as to detect passage of the projection 151 by determining whether or not light emitted from the LED has been blocked by the projection 151.

The control unit (not shown) disposed in the lens barrel 1 drives the second lens group 40 and the third lens group 50 over the respective ranges of movement by driving the motors 130 and 140. In addition, the control unit determines the positions of the lens groups based upon the timing with which the projections 151 at the individual lens groups pass through the corresponding position detectors 150.

Next, the method that may be adopted when assembling the lens barrel 1 in the first embodiment is explained. In the first embodiment, a module assembled in advance by mounting the lead screws 110 and 120 and the motors 130 and 140 at the motor holder unit 3, is then mounted at the barrel body 2.
FIGS. 8 (a) and 8 (b) schematically illustrate the method with which the motor holder unit 3 is mounted at the barrel body 2, with FIG. 8(a) showing the pre-mount state and FIG. 8(b) showing the mounted state.
It is to be noted that, in order to facilitate better understanding of the method, structural details and the like of the various members are simplified in the illustrations presented in FIGS. 8(a) and 8 (b).

As shown in FIG. 8 (a), the motor holder unit 3 is mounted at the barrel body 2 along a direction extending substantially perpendicular to both the optical axis I1 and the optical axis I2 (along the up/down direction in FIG. 8 (a)). The lens holder nuts 42 and 52 both ranging along this mounting direction each include a grooved portion formed by opening up its end toward the motor holder 3 with a female screw portion formed at one end surface inside the groove. Thus, as the motor holder unit 3 is mounted at the barrel body 2, the lead screws 110 and 120 are inserted in the grooves at the corresponding lens holder nuts 42 and 52.

The motor holder unit 3 is locked onto the barrel body 2 by fitting an elastic tab portion 2c formed at the end of the barrel body 2 toward the motor holder unit 3 into an opening 3c formed at the motor holder unit 3 at the corresponding position and allowing this tab portion to be held in the opening.
It is to be noted that an elastic member 6 constituted of an elastic material such as rubber is disposed at the position where the barrel body 2 and the motor holder unit 3 are joined together, between the surfaces of the barrel body and the motor holder unit facing opposite each other. As tension attributable to the repulsion of the elastic member 6 is applied to the tab portion 2c, the positional relationship between the barrel body 2 and the motor holder unit 3 is stabilized so as to sustain a substantially steady positional relationship between the lead screws 110 and 120 and the lens holder nuts 42 and 52.

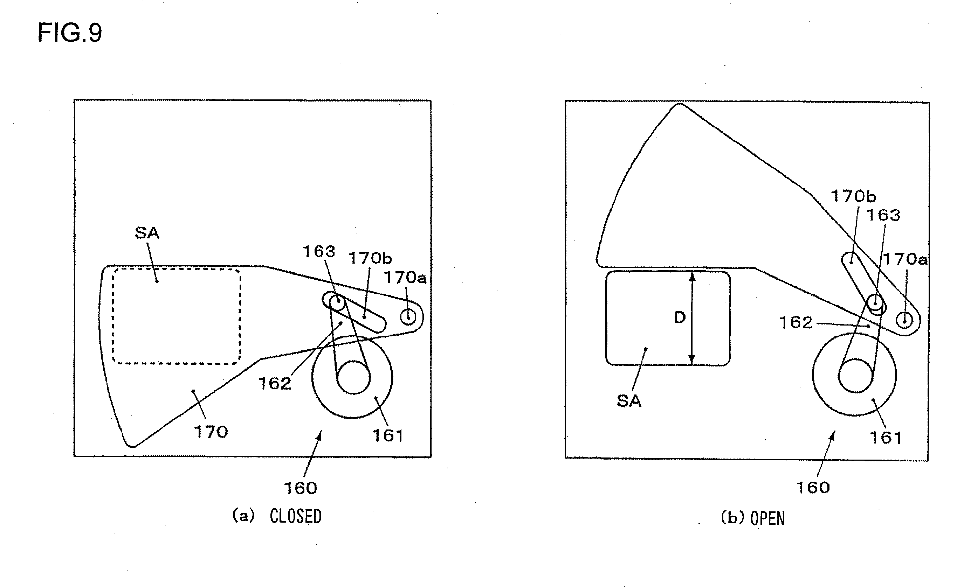

FIGS. 9 (a) and 9 (b) present views of the shutter drive unit 160 and the shutter blade 170 taken from the direction along the optical axis 12. FIG. 9(a) shows them in a shutter-closed state, whereas FIG. 9(b) shows them in a shutter-open state. In addition, a shutter opening shape SA in FIGS. 9 (a) and 9 (b) roughly indicates the shape of the image light corresponding to the imaging area that needs to be shielded from the light with the shutter blade 170. The shutter opening shape SA is defined by a shutter opening aperture 175 (see FIG. 3) disposed adjacent to the shutter blade 170.

The shutter blade 170 in the first embodiment is a member constituted with a single plate and is mounted at the shutter unit S so as to be allowed to rotate around a rotational center 170a to enter the shutter-closed state or the shutter-open state. A groove 170b is formed at a position close to the rotational center 170a at which the presence of the groove does not affect the light shielding operation of the shutter blade 170.

The shutter drive unit 160 includes a shutter motor 161 and a shutter drive arm 162. The shutter drive arm 162, mounted at an output shaft of the shutter motor 161, is rotationally driven as the shutter motor 161 rotates. An engaging pin 163 is disposed at the front end of the shutter drive arm 162 and the engaging pin 163 engages in the groove 170b at the shutter blade 170. Via this mechanism, the shutter blade 170 is rotationally driven between the shutter-closed state and the shutter-open state with the drive force provided from the shutter motor 161. It is to be noted that the shutter blade will have entered the shutter-open state to allow the image light to travel to the CCD 90 prior to a shutter release operation in the camera equipped with the lens barrel 1 achieved in the first embodiment. In response to the shutter release operation, data storage starts and then the shutter closing operation is started with specific timing.

The shutter blade 170 moves between the shutter-closed state and the shutter-open state as it is driven by the shutter drive unit 160 described above along a direction substantially extending along the shorter side of the shutter opening shape SA.
The rationale for driving the shutter blade 170 in the direction substantially extending along the shorter side of the shutter opening shape SA is now explained.

In the first embodiment, the shutter unit S is fixed outside of the ranges of movement of the second lens group 40 and the third lens group 50 and thus, the shutter unit S can remain stationary when the lens groups move, which allows the motors 130 and 140 to be provided as more compact units. This allows the overall lens barrel 1 to be provided as a compact unit. At the same time, as the second lens group 40 and the third lens group 50 move, the principal point position, too, is displaced between the principal point position HW at the wide-angle end and the principal point position HT at the telephoto end in the first embodiment, as shown in FIG. 2. Since the shutter blade 170 is disposed at a position set apart by a significant distance from the principal point position, uneven exposure may occur unless the shutter blade 170 adopts an optimal structure addressing this distance issue.

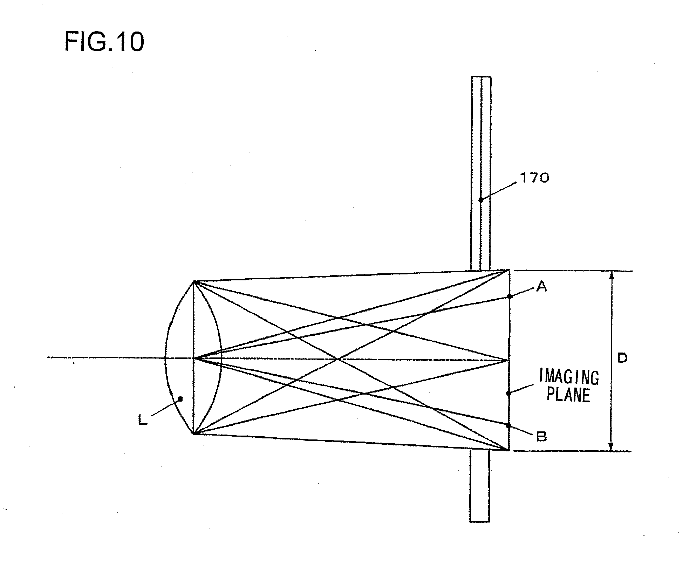

FIG. 10 schematically illustrates the relationship between the light fluxes departing the photographic optical system (which includes the first lens group 30, the second lens group 40 and the third lens group 50) and the shutter blade 170. In the illustration presented in FIG. 10, the photographic optical system is represented by a single lens L for purposes of simplification. The shutter blade 170, disposed at a position close to the imaging plane blocks the light fluxes as the shutter blade 170 moves from the top side to the bottom side in the figure. D in FIG. 10 indicates the distance traveled by the shutter blade 170 to switch from the shutter-open state to the shutter-closed state.

Image light departing the lens L and arriving at the imaging plane reaches the imaging plane from various positions at the lens L. The shutter blade 170 is disposed at a position further away from the principal point of the photographic optical system than in the related art. For this reason, the sectional area of the shutterblade 170 of the light flux ranging perpendicular to its optical axis at the position at which the shutterblade 170 is disposed is significant, necessitating a greater length of time for the shutter blade 170 to pass through the section of the light flux.

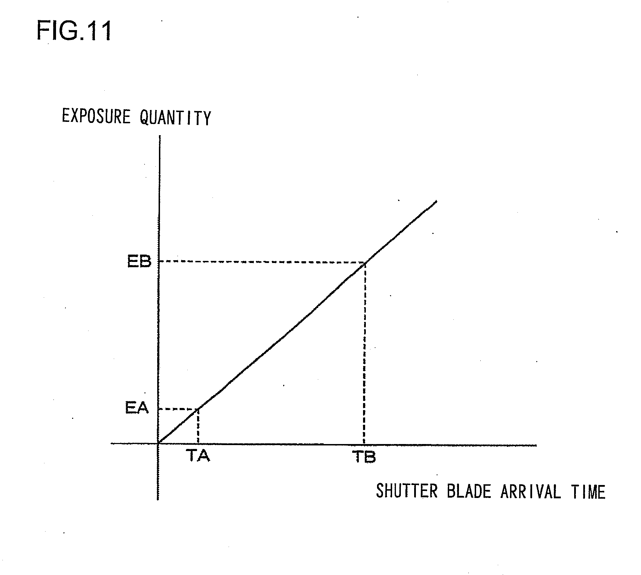

FIG. 11 shows the relationship between the position of the shutter blade 170 as it moves and the exposure quantity, as observed at the imaging plane shown in FIG. 10. The position of the shutter blade 170 on the imaging plane as it moves over time is indicated along the horizontal axis and the exposure quantity is indicated along the vertical axis in FIG. 11.
The shutter blade 170, having started a closing operation, first reaches a position A at a time point TA and the exposure achieved at position A matches an exposure quantity EA. The shutter blade 170 keeps moving to reach position B at a time point TB and the exposure achieved at position B matches an exposure quantity EB. Accordingly, a significant time difference between the time point TA and the time point TB may manifest as uneven exposure in the photographing results.

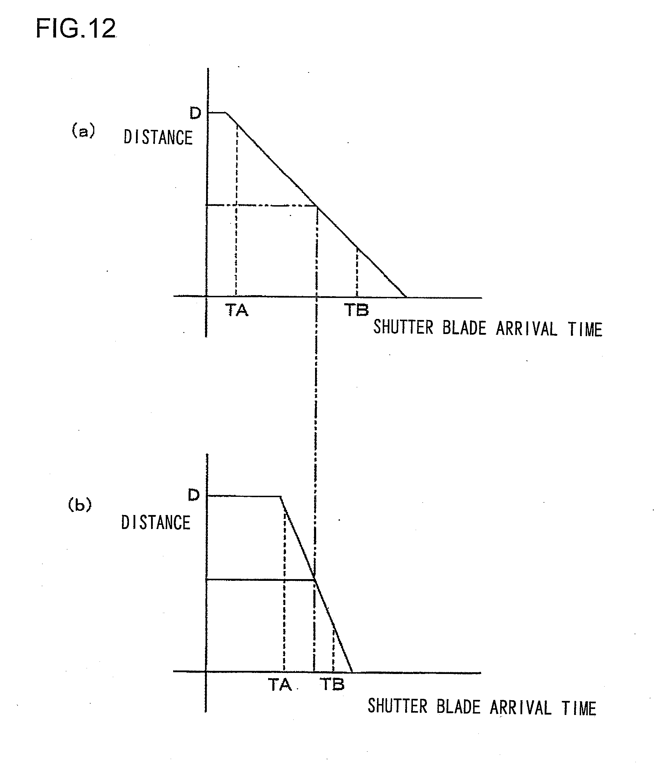

FIGS. 12 (a) and 12 (b) each show the relationship between the shutter blade position relative to the imaging plane and the shutter blade arrival time. FIG. 12(a) shows the relationship in a comparison example in which the shutter blade moves with a speed equivalent to that in the related art, whereas FIG. 12(b) shows the relationship observed in the first embodiment.

D indicated on the vertical axis in FIGS. 12 (a) and 12 (b) indicates the distance D traveled by the shutter blade 170 to enter the shutter-closed state (i.e., the width of the opening measured along the direction in which the shutter blade 170 travels). The distance D in FIG. 12(b) corresponds to the length of the shorter side of the shutter opening shape SA shown in FIG. 9(b). It is to be noted that the shutter blade 170 travels along an arc, and while the actual traveling distance does not match D indicated in FIGS. 12 (a) and 12 (b), the explanation is given by assuming, for purposes of simplification, that the shutter blade 170 moves linearly. FIG. 12(a) clearly indicates the unevenness of exposure at various positions will become more pronounced when the distance D is greater and thus, the distance D should be set as small as possible.

Accordingly, in the first embodiment, the shutter blade 170 is made to move in the direction substantially extending along the shorter side of the shutter opening shape SA, so as to reduce the extent of uneven exposure by reducing the traveling distance compared to the extent of uneven exposure manifesting when the shutter blade 170 moves along another direction.

In addition, in the first embodiment, the shutter blade 170 is made to move at a speed substantially double the traveling speed in the comparison example presented in FIG. 12 (a). As a result, the time difference between the time point TA and the time point TB is reduced, as shown in FIG. 12 (b) to reduce the extent of uneven exposure to a level at which the uneven exposure is practically insignificant. It is to be noted that since the shutter blade 170 spends less time traveling when the traveling distance D is short, and it is not strictly necessary to raise the traveling speed of the shutter blade 170.

Furthermore, it is desirable that the shutter blade 170 be disposed at a position very close to the areas over which the movable lens groups (the second lens group 40 and the third lens group 50) are allowed to move. This positional arrangement reduces the length of time required by the shutter blade 170 to move across a light flux advancing toward a specific position on the imaging plane (see FIG. 10) and thus, effectively reduces the extent of uneven exposure. Accordingly, the shutter unit S is disposed at a position as close as possible to the areas over which the second lens group 40 and the third lens group 50 are allowed to move in the first embodiment, as shown in FIG. 2(b).

As explained above, the lens barrel 1 achieved in the first embodiment includes a photographic optical system (which may include, for instance, the first lens group 30, the second lens group 40 and the third lens group 50) capable of altering the focal length, the movable lens groups (e.g., the second lens group 40 and the third lens group 50) constituting part of the photographic optical system, which move along the optical axis I2 to alter the focal length, the image sensor 90 disposed at the image forming plane of the photographic optical system to capture the subject image, and the shutter unit S disposed between the movable lens groups 40 and 50 and the image sensor 90, which includes the shutter blade 170 for blocking a photographic light flux passing through the photographic optical system. In this lens barrel 1, the position of the principal point of the photographic optical system moves as the movable lens groups 40 and 50 move along the optical axis I2 and the shutter unit S is disposed by ensuring that the distances between the range of motion endpoints of the movable lens groups 40 and 50 and the shutter blade 170 are shorter than the distance between the image sensor 90 and the shutter blade 170.

The range of motion endpoints of the movable lens groups 40 and 50 is the position of the third lens group 50 at the telephoto end along the optical axis I2, as shown in FIG. 2 (b). Accordingly, the shutter unit S is disposed at a position at which the distance between the third lens group 50 and the shutter blade 170 measured along the optical axis 12 at the telephoto end is shorter than the distance between the image sensor 90 and the shutter blade 170 measured along the optical axis I2.

Generally speaking, while the shutter only needs to have a small opening if the shutter unit S is disposed at the principal point position, such a positional arrangement necessitates the shutter unit S to move together with the movable lens groups. By adopting the first embodiment with the shutter unit S disposed at a specific position described above outside the ranges of motion of the movable lens groups 40 and 50, the lens barrel 1 can be provided as a more compact unit.

When the shutter blade 170 blocks the photographic light flux from the photographic optical system, it travels along the direction extending substantially along the shorter side of the rectangular imaging area (corresponding to the shutter opening shape SA) as shown in FIGS. 9 (a) and 9 (b). Thus, the shutter blade 170 spends less time traveling to reduce the extent of uneven exposure.

Comparison of changes in the timing with which the shutter blade passes over a light flux to form an image at a point in the peripheral area of the imaging plane, occurring as the distance between the image sensor and the shutter changes indicates that, generally speaking, the shutter blade needs to travel over a greater distance when the distance between the image sensor and the shutter is shorter, necessitating the shutter blade to pass through with more accelerated timing. This causes a difference between the exposure quantity at the point on the optical axis on the imaging plane and the exposure quantity at a point in the peripheral area of the imaging plane to result in uneven exposure. The shutter blade 170 in the first embodiment, on the other hand, is disposed in the immediate vicinity of the range of motion endpoints of the movable lens groups 40 and 50 to result in a lower extent of uneven exposure.

### -- Second Embodiment --

In the second embodiment, the shutter blade 170 and the shutter drive unit 160 in the first embodiment described earlier are replaced by shutter blades 271 and 272 and a shutter drive unit 260. The second embodiment is described by assigning the same reference numerals to components having functions similar to those in the first embodiment explained earlier so as to preclude the necessity for a repeated explanation thereof.

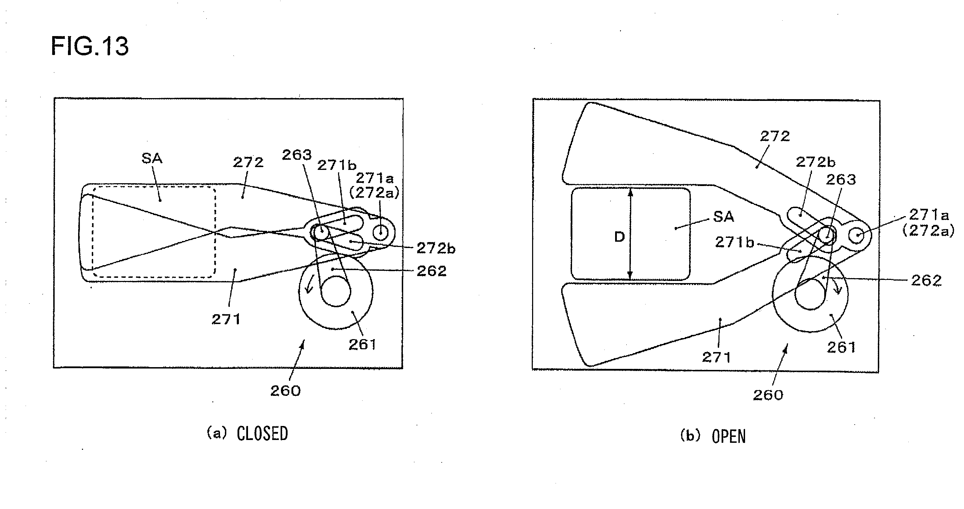

FIGS. 13 (a) and 13 (b) present views of the shutter drive unit 260 and the shutterblades 271 and272 taken fromadirection along the optical axis I2. FIG. 13(a) shows them in a shutter-closed state, whereas FIG. 13(b) shows them in a shutter-open state.

In the second embodiment, the shutter blades 271 and 272, constituted with two plate members are used in combination. The shutter blades 271 and 272 are mounted at the shutter unit S and are allowed to rotate around rotational centers 271a and 272a respectively to enter the shutter-closed state or the shutter-open state. Grooves 271b and 272b are formed at positions close to the rotational centers 271a and 272a at which the presence of the grooves does not affect the light shielding operation of the shutter blades 271 and 272.

A shutter motor 261 and a shutter drive arm 262 are disposed at the shutter drive unit 260. The shutter drive arm 262, mounted at the output shaft of the shutter motor 261, is rotationally driven as the shutter motor 261 rotates. An engaging pin 263 is disposed at the front end of the shutter drive arm 262 and the engaging pin 263 engages in the grooves 271b and 272b at the shutter blades 271 and 272. Via this mechanism, the shutter blades 271 and 272 are rotationally driven between the shutter-closed state and the shutter-open state with the drive force provided from the shutter motor 261.

The shutter blades 271 and 272 are driven by the shutter drive unit 260 described above along opposite directions, both substantially extending along the shorter side of the shutter opening shape SA to switch between the shutter-closed state and the shutter-open state. Namely, when shifting from the shutter-closed state to the shutter-open state, the shutter blade 271 is rotationally driven along the counterclockwise direction around the rotational center 271a and the shutter blade 272 is rotationally driven along the clockwise direction around the rotational center 272a.

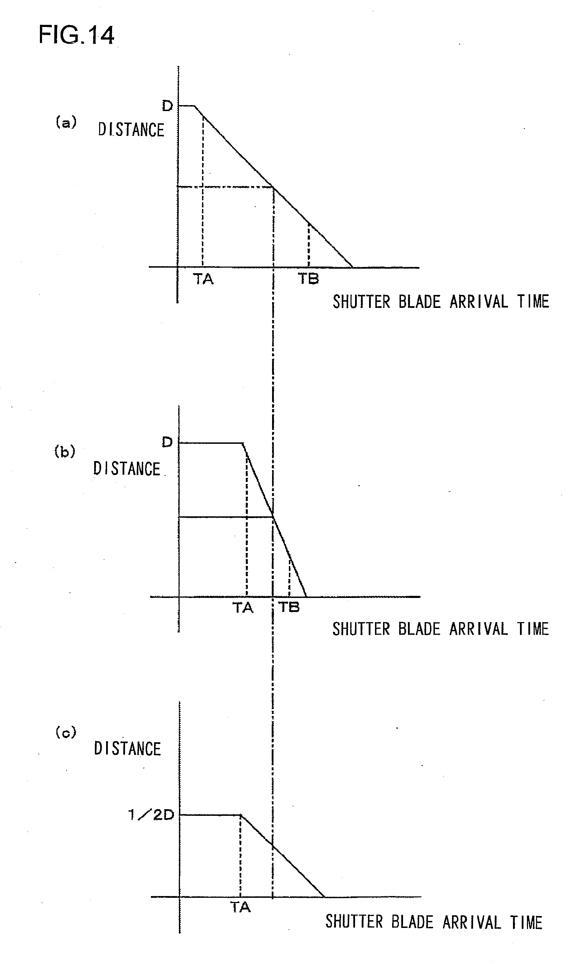

FIGS. 14(a) through 14(c) each show the relationship between the shutter blade position relative to the imaging plane and the shutter blade arrival time. For purposes of comparison, graphs similar to those in FIGS. 12 (a) and 12 (b) are presented in FIGS. 14(a) and 14(b). The relationship achieved in the second embodiment is shown in FIG. 14(c).
As explained earlier, when a shutter blade needs to travel over a smaller distance, the time lag (the difference between the time point TA and the time point TB) elapsing before the light becomes blocked by the shutter blade is reduced and ultimately, the extent of uneven exposure, too, is reduced.

Accordingly, different areas contained in the shutter opening shape SA are shielded from the light with the two shutter blades 271 and 272 in the second embodiment. As a result, the two shutter blades 271 and 272 each need to travel substantially half the distance traveled by the shutter blade 170 in the first embodiment and thus, the length of traveling time spent by the shutter blades 271 and 272 is reduced. In other words, the extent of uneven exposure can be reduced to a level comparable to that achieved in the first embodiment without having to raise the traveling speed of the shutter blades 271 and 272. As a result, a smaller and less expensive motor can be used as the shutter motor 261 to drive the shutter blades 271 and 272.

In addition, by using two shutter blades in combination, as shown in FIG. 13 (a) and 13 (b), the need to secure a large shutter blade retreat space (the position to which the shutter blades retreat in the shutter-open state) on one side is eliminated and the retreat space can be secured by efficiently utilizing the available space so as to achieve the shutter unit as a more compact unit as a whole. It is to be noted that while two shutter blades 271 and 272 are used in the second embodiment, the present invention is not limited to this example and the shutter unit may include a greater number of shutter blades, e.g., three, four or five shutter blades. By using two or more shutter blades and allowing the plurality of shutter blades to travel along matching directions during the shutter closing operation, the plurality of shutter blades can be set one on top of another in the retreat space. In this case, the shutter unit S with an even smaller retreat space than that shown in FIGS. 13 (a) and 13 (b) can be achieved and the entire shutter unit can be provided as an extremely small unit.

It is to be noted that when the two shutter blades 271 and 272 are used to shield the two areas separated from each other at a substantial center of the shutter opening shape SA as in the second embodiment, the area near the image plane center is exposed over the greatest length of time and the exposure time becomes shorter toward the ends of the image plane. In this case, uneven exposure occurs in symmetry relative to the image plane center and thus, even if uneven exposure occurs to an extent comparable to that in the first embodiment, a more natural looking image is provided.

As described above, the lens barrel 1 achieved in the second embodiment includes a plurality of shutter blades 271 and 272 which are individually driven along different directions both extending substantially perpendicular to the optical axis I2 of the photographic optical system. The structure allows the shutter blades 271 and 272 to travel over a shorter distance to reduce the extent of uneven exposure. In addition, since the retreat space into which the shutter blades 271 and 272 retreat can be minimized, the lens barrel 1 can be provided as a compact unit.

Furthermore, as the two shutter blades 271 and 272 move closer to each other, the photographic light flux is blocked and the two shutter blades 271 and 272 move into the closed position with one shutter blade set over the other near the optical axis I2 of the photographic optical system. Thus, even if uneven exposure occurs, it manifests in substantial symmetry relative to the image plane center to provide a more natural looking image.

### (Examples of variations)

The present invention is not limited to the first and second embodiments described above and allows for numerous variations and modifications which are also considered to be within the scope of the present invention or the equivalent thereof.

(1) In the first and second embodiments, the shutter unit S is disposed between the ranges of motion of the second lens group 40 and the third lens group 50 and the CCD 90. However, the present invention is not limited to this example and the shutter unit S may be disposed further toward the subject side along the optical axis relative to the ranges of motion of the second lens group 40 and the third lens group 50, e.g., between the first lens group 30 and the second lens group 40.

(2) The first and second embodiments each include a bending optical system constituted with the prism 20, which alters the direction of image light. However, the present invention is not limited to this example and it may be adopted in conjunction with a photographic optical system that is not equipped with the prism 20 and thus has a straight optical axis.

The imaging apparatus equipped with the lens barrel 1 having been described in reference to the first and second embodiments is a digital camera that electrically records images. However, the present invention is not limited to this example and the lens barrel 1 according to the present invention may be mounted at a silver halide film-type camera, instead. (4) While position of the principal point of the photographic optical system in the first and second embodiments moves as the focal length changes, the embodiments described above may also be adopted in a photographic optical system, the position of the principal point of which moves in another mode.

While the invention has been particularly shown and described with respect to preferred embodiments thereof by referring to the attached drawings, the present invention is not limited to these examples and it will be understood by those skilled in the art that various changes in form and detail may be made therein without departing from the scope and teaching of the invention.

The disclosure of the following priority application is herein incorporated by reference:
Japanese Patent Application No. 2005-116755 filed April 14, 2005

## Claims

1. A lens barrel comprising:
a photographic optical system capable of altering focal length;
a movable lens group constituting part of the photographic optical system, that moves along an optical axis when altering the focal length;
an image sensor disposed at an image forming plane of the photographic optical system to capture a subject image; and
a shutter unit disposed between the movable lens group and the image sensor, that comprises a shutter blade that blocks a photographic light flux passing through the photographic optical system, wherein:
a principal point of the photographic optical system moves as the movable lens group moves along the optical axis; and
the shutter unit is disposed by assuring that a distance between a range of motion endpoint of the movable lens group and the shutter blade is shorter than a distance between the image sensor and the shutter blades.

2. A lens barrel according to claim 1, wherein:
when the shutter blade is engaged in operation to block the photographic light flux in the photographic optical system, the shutter blade moves along a direction extending substantially along a shorter side of a rectangular imaging area.

3. A lens barrel according to claim 1 or claim 2, wherein:
the shutterblade comprises apluralityof shutterblades individually driven along different directions all substantially perpendicular to the optical axis of the photographic optical system.

4. A lens barrel according to claim 3, wherein:
the plurality of shutter blades are two shutter blades and as the two shutter blades move closer to each other, the photographic light flux is blocked until the two shutter blades enter a closed state with the two shutter blades placed one over another near the optical axis.

5. A lens barrel according to any one of claims 1 through 4, wherein:
the shutter blade is disposed in an immediate vicinity of the range of motion endpoint of the movable lens group.

6. An imaging apparatus comprising:
a lens barrel according to any one of claims 1 through 5.
